# EUROPEAN PATENT APPLICATION

(11) **EP 4 485 684 A1**
(43) Date of publication of application: **01.01.2025**
(21) Application number: 22928373.4
(22) Date of filing: 08.12.2022
(51) Int. Cl.: H01P 5/12

(54) **POWER DIVISION NETWORK AND ANTENNA STRUCTURE**

(30) Priority: 23.02.2022 CN 202210168831
(71) Applicant: PROSE TECHNOLOGIES (SUZHOU) CO., LTD., Suzhou, Jiangsu 215345 (CN)
(72) Inventor: DUAN, Zhiwen, Suzhou, Jiangsu 215345 (CN); JIANG, Tao, Suzhou, Jiangsu 215345 (CN); HUANG, Ping, Suzhou, Jiangsu 215345 (CN); SUN, Jing, Suzhou, Jiangsu 215345 (CN); WANG, Xu, Suzhou, Jiangsu 215345 (CN)
(74) Representative: Isarpatent
(86) International application number: PCT/CN2022/137429
(87) International publication number: WO 2023/160113

(57) **Abstract**

The present disclosure belongs to the antenna field and provides a power distribution network and an antenna structure. The power distribution network includes a cover plate, a reflection plate, a support component, and a feed line. The reflection plate is arranged separately from the cover plate. One surface of the reflection plate is a reflection surface. A plurality of connectors protrude from one surface of the reflection plate opposite to the reflection surface. The plurality of connectors are arranged at intervals. The plurality of connectors are coupled with the cover plate and divide the space between the reflection plate and the cover plate into at least one hollow chamber. The support component is at least partially arranged in the hollow chamber. The feed line is arranged in the hollow chamber and mounted at the support component. The feed line of the present disclosure is located in the hollow chamber between the reflection plate and the cover plate. Since a medium with a low dielectric constant is filled, the dielectric loss can be lowered, and the energy may not be radiated to the air. Thus, the loss of the power distribution network can be reduced.

## Description

### TECHNICAL FIELD

The present disclosure generally relates to the technology field of antenna, and more particularly, to a power distribution network and an antenna structure.

### BACKGROUND

As an important member of a wireless communication system, a base station antenna plays an important function in the wireless communication network. When transmitting a signal, the antenna converts a high-frequency current into an electromagnetic wave. When receiving a signal, the antenna converts the electromagnetic wave into a high-frequency current. A power distribution network is an important device configured to synthesize and assign electromagnetic wave energy. The power distribution network is configured to assign the input power to radiation units in the base station antenna. In practical applications, the power distribution network often assigns a certain output power to sub-circuits with a certain ratio.

The existing power distribution network is manufactured by directly adding a power distribution circuit on a PCB board. A medium such as the PCB board will consume energy, and the power distribution network will radiate energy into the air. Thus, the energy loss is large during the energy transmission of the power distribution network.

### SUMMARY

The purpose of the present disclosure is to provide a power distribution network and an antenna structure, which can lower the dielectric loss and the loss of the power distribution network.

The technical solution of the present disclosure includes the following aspects.

On one aspect, a power distribution network is provided and includes:
a cover plate;
a reflection plate arranged separately from the cover plate, one surface of the reflection plate being a reflection surface, wherein a plurality of connectors protrude from one surface of the reflection plate opposite to the reflection surface, are arranged at intervals and electrically connected to the cover plate, and divide a space between the reflection plate and the cover plate into at least one hollow chamber;
a support component at least partially arranged in the hollow chamber; and
a feed line arranged in the hollow chamber and mounted at the support component.

In some embodiments, the feed line is a strip line structure or a microstrip line structure; and/or
a distance exists between the feed line and the cover plate, and a distance exists between the feed line and the reflection plate.

In some embodiments, the cover plate is made of metal, or a surface of the cover plate includes a metal plating layer; and
the reflection plate is made of metal, or a surface of the reflection plate includes a metal plating layer.

In some embodiments, the plurality of connectors are arranged along a first direction of the reflection plate at intervals and extend along a second direction of the reflection plate, and the first direction is perpendicular to the second direction.

In some embodiments, the support component is made of plastic; and/or
the support component point-supports or surface-supports the feed line.

In some embodiments, a cross-section of the hollow chamber is a rectangle, circle, or polygon.

On the other aspect, an antenna structure is provided and includes a radiation unit and the power distribution network of any one embodiment above. The radiation unit is arranged on the reflection surface of the reflection plate and electrically connected to the feed line.

In some embodiments, an adjustment member protrudes from the reflection surface of the reflection plate, and a wave width of an antenna is adjusted by adjusting a height of the adjustment member protruding from the reflection surface.

In some embodiments, the feed line is electrically connected to the radiation unit through a phase difference network.

In some embodiments, the radiation unit is a dipole radiation unit, and the feed line is electrically connected to the dipole radiation unit.

In some embodiments, the radiation unit is a gap feed radiation unit, and the feed line is electrically connected to the gap feed radiation unit.

The technical effect of the present disclosure includes:
1. The feed line is located in the hollow chamber between the reflection plate and the cover plate. Since the medium with the low dielectric constant is filled such as air, the dielectric loss can be lowered, and the energy may not be radiated into the air. Thus, the loss of the power distribution network can be reduced.
2. The assembly of the power distribution network and the radiation unit can be simple, and the strength of the antenna can be effectively enhanced. The assembly and welding can be easy. The welding stability and the welding precision can be improved, and the surface mounted technology (SMT) efficiency of the production line can be improved.
3. The antenna adopts the strip line feed network. Thus, the radiation efficiency can be good, and the communication quality can be great.
4. The antenna has a module design, which includes a flexible architecture, is easy to modify, and is easier to maintain.

### BRIEF DESCRIPTION OF THE DRAWINGS

The present disclosure is further described in detail in connection with the accompanying drawings and embodiments of the present disclosure.
FIG. 1 is a schematic exploded diagram of an antenna structure according to some embodiments of the present disclosure.
FIG. 2 is a schematic structural diagram of an antenna structure according to some embodiments of the present disclosure.
FIG. 3 is a schematic front view of an antenna structure according to some embodiments of the present disclosure.
FIG. 4 is a schematic exploded structural diagram showing an electrical feed radio frequency unit and a feed line of an antenna structure according to some embodiments of the present disclosure.
FIG. 5 is an enlarged view in FIG. 5.
FIG 6 is a schematic structural diagram of a combination in FIG. 4.
FIG. 7 is a schematic structural diagram showing an electrical connection between the gap electrical radiation unit and a feed line and positive and negative polarizations share a common chamber according to some embodiments of the present disclosure.
FIG. 8 is a schematic structural diagram showing an electrical connection between a radiation unit and a feed line of an antenna structure through a phase difference network according to some embodiments of the present disclosure.
FIG. 9 is a schematic diagram of a divided structure of FIG. 8.
FIG. 10 is a schematic structural diagram showing an electrical connection between a dipole radiation unit and a feed electrical circuit of an antenna structure according to some embodiments of the present disclosure.
FIG. 11 is a schematic diagram of a divided structure of FIG. 10.

Reference numerals:
10 Cover plate, 20 Reflection plate, 201 Reflection surface, 202 Connector, 203 First I-shaped gap, 204 Second I-shaped gap, 205 Third I-shaped gap, 206 Fourth I-shaped gap, 207 Adjustment member, 30 Support component, 40 Feed line, 50 Radiation unit, 60 Hollow chamber.

### DETAILED DESCRIPTION OF THE EMBODIMENTS

To describe embodiments of the present disclosure or the technical solution of the existing technology in detail, embodiments of the present disclosure are described according to the accompanying drawings. Apparently, the accompanying drawings below are merely some embodiments of the present disclosure. For those ordinary skills in the art, without creative efforts, other accompanying drawings can be obtained according to the accompanying drawings and other embodiments.

To simplify the drawings, the drawings only illustrate members related to the present disclosure, which cannot represent the actual structure of a product. In addition, to make the drawings simple and facilitate understanding, members with the same structure or functions in some drawings, only one of the members can be illustrated, or only one of the members can be marked. In the present disclosure, "a" not only represents "only one" but also "more than one."

Furthermore, the term "and/or" used in the specification and the appended claims of the present disclosure can represent one or more combinations of the items listed and include these combinations.

In the present disclosure, it should be noted that, unless otherwise specified and limited, the terms "mounting," "connection," and "coupled" should be understood broadly. For example, the connection can be a fixed connection, a detachable connection, or an integrated connection. The connection can also be mechanical or electrical. The connection can be a direct connection or an indirect connection through an intermediate medium. The connection can also be a communication of the internal chamber of two elements. For those ordinary skills in the art, the meanings of the above terms in the present disclosure can be understood according to specific situations.

In addition, in the description of the present disclosure, the terms "first," "second," etc. are only used to differentiate and should not be construed as indicating or implying relative importance.

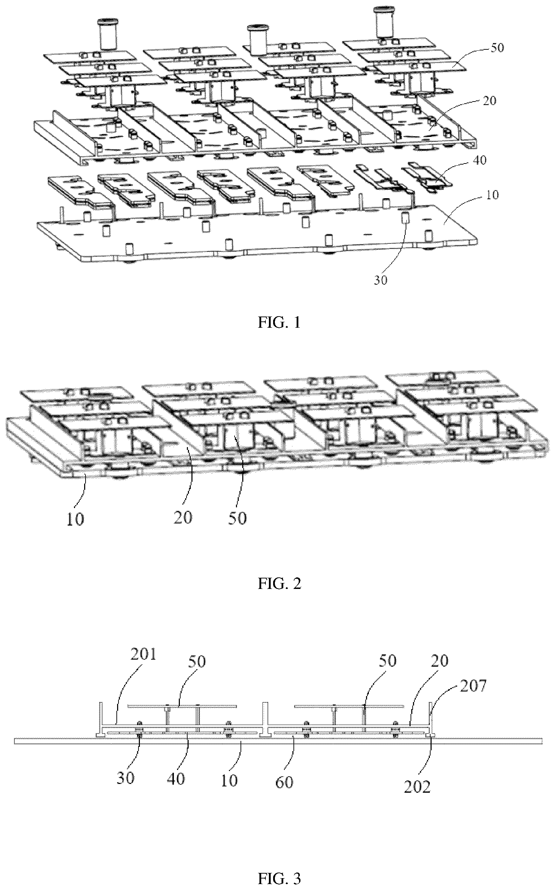

In embodiments of the present disclosure, as shown in FIG. 1 to FIG. 3, a power distribution network includes a cover plate 10, a reflection plate 20, a support component 30, and a feed line 40. The reflection plate 20 is arranged apart from the cover plate 10. A surface of the reflection plate 20 is as a reflection surface 201. A plurality of connectors 202 protrude from a surface opposite the reflection surface 201 of the reflection plate 20. As shown in FIG. 3, along an up and down direction in FIG. 3, the reflection surface 201 is the upper surface of the reflection plate 20, while the connectors 202 are arranged on the lower surface of the reflection plate 20. The upper surface (the reflection surface 201) of the reflation plate 20 is away from the cover plate 10. The lower surface of the reflection plate 20 is close to the cover plate 10. A reflection unit 50 is mounted above the reflection surface 201. The reflection surface 201 is configured to reflect a radiation wave transmitted by the radiation unit 50. In the present disclosure, the reflection surface 201 of the reflection plate 20 is directly configured to reflect the radiation wave, and a separate reflection structure is no longer needed. Thus, the overall antenna structure is simple. The reflection surface 201 of the reflection plate 20 can be a flat surface or a curved surface.

The plurality of connectors 202 are arranged at intervals at the bottom of the reflection plate 20 and are integrally formed with the reflection plate 20. The plurality of connectors 202 can be arranged at intervals along a first direction of the reflection plate 20 and extend along a second direction of the reflection plate 20. The first direction can intersect with the second direction. In some embodiments, the first direction can be perpendicular to the second direction. The first direction of the reflection plate 20 can be the left and right direction in FIG. 3. The second direction of the reflection plate 20 can be the direction perpendicular to the paper surface in FIG. 3. The thickness direction of the reflection plate 20 is the up and down direction in Fig. 3.

The connectors 202 can be electrically connected to the cover plate 10. The connectors 202 can be directly connected to the cover plate 10 to realize the electrical connection or indirectly connected (e.g., coupling connection) to realize the electrical connection. After the connectors 202 are arranged at the cover plate 10, a distance can exist between the reflection plate 20 and the cover plate 10 through the support of the connectors 202. The distance between the reflection plate 20 and the cover plate 10 can be divided into a plurality of hollow chambers 60 by the connectors 202. The plurality of hollow chambers 60 can be arranged sequentially along the length direction of the reflection plate 20. A cross-section of a hollow chamber 60 can be a rectangle, circle, or polygon. The cover plate 10 can be made of metal, or a surface of the cover plate 10 can include a metal plating layer. The reflection plate 20 can be made of metal, or a surface of the reflection plate 20 can include a metal plating layer. Thus, the reflection plate 20 can be electrically connected to the cover plate 10. The connectors 202 and the cover plate 10 can be fixed connected in a medium spaced coupling method, or directly connected through metal contact. The reflection plate 20 can be formed by sheet metal or metal die-casting, and the cover plate 10 can be formed by metal die-casting or pultrusion.

The support component 30 can be arranged in the hollow chamber 60. The feed line 40 can be arranged in the hollow chamber 40 and located at the support component 30. The support component 30 can be configured to support the feed line 40 in the hollow chamber 60. The support component 30 can be formed integrally with the cover plate 10 or separately from the cover plate 10. The support component 30 can be made of plastic. The support component 30 can have a cylindrical structure and be configured to point support the feed line 40, or have a plate structure and be configured to surface-support the feed line 40. When the support component 30 surface-supports the feed line 40, a flatness of the support component 30 supporting the feed line 40 can be improved to improve the consistency of the power distribution network. When the support component 30 point-supports the feed line 40, a plurality of support points are needed, which is not as convenient as surface support for installation, and has higher complexity than the surface support.

When the power distribution network is installed, the feed line 40 can be mounted at the support component 30 first. Then, the cover plate 10 can be mounted at the reflection plate 20. When the radiation unit 50 needs to be installed, the radiation unit 50 can be first connected to the feed line 40, and the cover plate 40 can be then mounted at the reflection plate 20.

In the above-mentioned embodiment, the feed line 40 can be arranged between the reflection plate 20 and the cover plate 10. By using the air as a medium, the reflection plate 20 and the cover plate 10 as the ground for the feed line 40, since the filling medium is the air. The air dielectric loss is small, which reduces the dielectric loss. Thus, loss of the power distribution network can be reduced. Moreover, the feed line 40 can be arranged in the hollow chamber 60 and does not radiate energy into the air, which can further reduce the loss of the power distribution network.

In some embodiments, the feed line 40 can have a strip line structure or a microstrip line structure. Thus, the feed line 40 can have good radiation efficiency and good communication quality. The power distribution network of embodiments of the present disclosure can be applied in the antenna. When the feed line 40 is the microstrip line, the loss factor of the antenna can be 0.0025, and the gain of the antenna is 10.5 dB. When the feed line 40 is a strip line, the loss factor of the antenna can be 0.001, and the gain of the antenna can be 10.9 dB.

A distance may exist between the feed line 40 and the cover plate 10. A distance may exist between the feed line 40 and the reflection plate 20. The feed line 40 may not contact the reflection plate 20 and the cover plate 10. Since the filling medium between the feed line 40 and the reflection plate 20 and the feed line 40 and the cover plate 10 is the air, the medium loss can be reduced, and the loss of the power distribution network. The medium between the feed line 40 and the reflection plate 20 and between the feed line 40 and the cover plate 10 can be filled with a medium with lower dielectric constant and dielectric loss as needed to reduce the dielectric loss and reduce the loss of the power distribution network.

The present disclosure further provides embodiments of an antenna structure. As shown in FIG. 1 to FIG. 3, the antenna structure includes the radiation unit 50 and the power distribution network of any one of the above embodiments. The radiation unit 50 is arranged on the reflection surface 201 of the reflection plate 20 and electrically connected to the feed line 40. The radiation unit 50 can be electrically connected to the reflection plate 20 in the medium-spaced coupling method or through the direct connection with metal contact. A plurality of radiation units 50 can be provided. The plurality of radiation units 50 can be arranged sequentially at the reflection plate 20 along the first direction and the second direction of the reflection plate 20.

Further, an adjustment member 207 can protrude from the reflection surface 201 of the reflection plate 20. By adjusting the height of the adjustment member 207 protruding from the reflection surface 201, the wave width of the antenna can be adjusted.

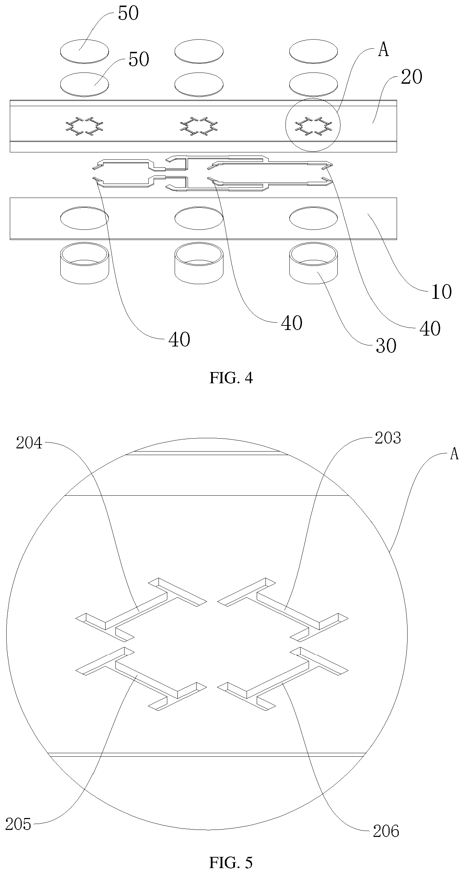

In one embodiment, as shown in FIG. 4 to FIG. 6, the radiation unit 50 is a gap feed radiation unit. The feed line 40 is electrically connected to the gap feed radiation unit. As shown in FIG. 4, the reflection plate 20 includes the gap feed radiation unit. The feed line 40 is electrically connected to the gap feed radiation unit. As shown in FIG. 5, the gap feed radiation unit includes four I-shaped gaps, including a first I-shape gap 203, a second I-shape gap 204, a third I-shape gap 205, and a fourth I-shape gap 206. The first I-shape gap 203, the second I-shape gap 204, the third I-shape gap 205, and the fourth I-shape gap 206 are arranged end-to-end to form an annular structure. The gap feed radiation unit can have a symmetrical structure. In some embodiments, the gap feed radiation unit can have a symmetrical structure for optimizing for main polarization and cross-polarization.

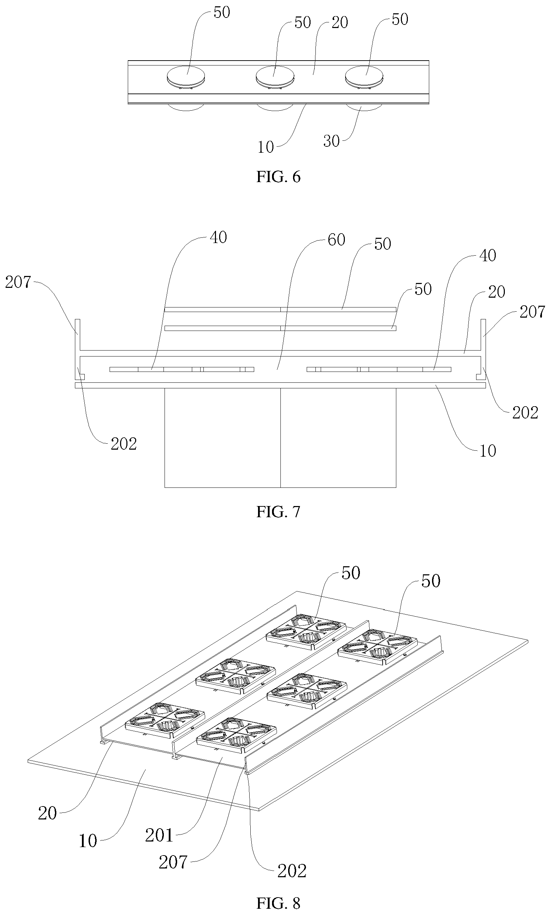

The negative and positive polarizations of the antenna structure of the present disclosure can share the chamber or can be arranged in separate chambers. As shown in FIG. 7, when the positive and negative polarizations share the chamber, two feed lines 40 of the positive and negative polarizations are arranged in the same hollow chamber 60. When the positive and negative polarizations are in separate chambers, the feed line 40 of the positive polarization and the feed line 40 of the negative polarization can be arranged in different hollow chambers 60.

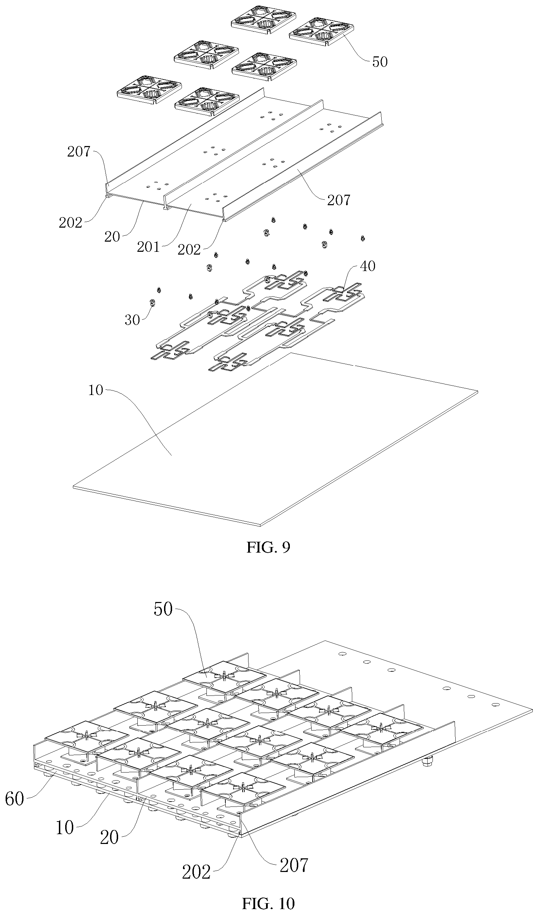

In another embodiment, as shown in FIG. 8 and FIG. 9, the feed line 40 is electrically connected to the radiation unit 50 through a phase difference feed network. A four-point feed unit can be electrically connected to the radiation surface through the phase difference network for two-point feeding. The feed phase difference can include 90 deg, 90 deg, and 180 deg. The four-point feed can provide better cross-polarization and a lower array section. Meanwhile, the four-point feed array can have a simple structure and can be easy to assemble.

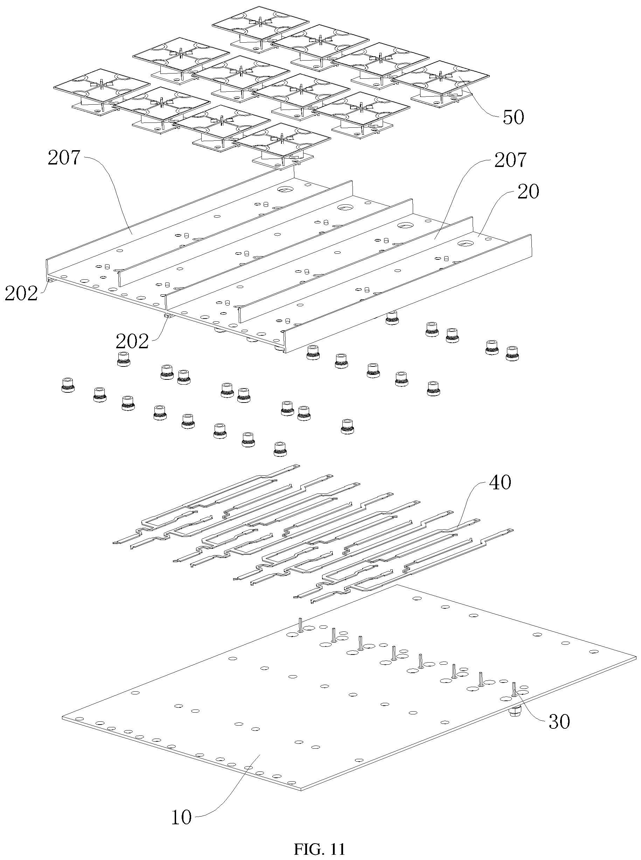

In still another embodiment, as shown in FIG. 10 and FIG. 11, the radiation unit 50 is a dipole radiation unit. The feed line 40 is electrically connected to the dipole radiation unit. Feeding by being connected to the radiation surface through quarter-wavelength baluns, a better directional symmetry and fewer welding points can be achieved. The balun can be used to balance the feeding.

The above are merely some implementations of the present disclosure. For those skilled in the art, various modifications and improvements can be made without departing from the principles of the present disclosure, and these modifications and improvements should also be within the scope of the present disclosure.

## Claims

1. A power distribution network, wherein the power distribution network comprises:
a cover plate;
a reflection plate arranged separately from the cover plate, one surface of the reflection plate being a reflection surface, wherein a plurality of connectors protruding from one surface of the reflection plate opposite to the reflection surface are arranged at intervals and electrically connected to the cover plate, and divide a space between the reflection plate and the cover plate into at least one hollow chamber;
a support component at least partially arranged in the hollow chamber; and
a feed line arranged in the hollow chamber and mounted at the support component.

2. The power distribution network according to claim 1, wherein:
the feed line is a strip line structure or a microstrip line structure; and/or
a distance exists between the feed line and the cover plate, and a distance exists between the feed line and the reflection plate.

3. The power distribution network according to claim 1, wherein:
the cover plate is made of metal, or a surface of the cover plate includes a metal plating layer; and
the reflection plate is made of metal, or a surface of the reflection plate includes a metal plating layer.

4. The power distribution network according to claim 1, wherein:
the plurality of connectors are arranged along a first direction of the reflection plate at intervals and extend along a second direction of the reflection plate; and
the first direction is perpendicular to the second direction.

5. The power distribution network according to claim 1, wherein:
the support component is made of plastic; and/or
the support component point-supports or surface-supports the feed line.

6. The power distribution network according to claim 1, wherein a cross-section of the hollow chamber is a rectangle, circle, or polygon.

7. An antenna structure, wherein the antenna structure comprises:
the power distribution network according to any one of claims 1 to 6,
wherein a radiation unit is arranged on the reflection surface of the reflection plate and electrically connected to the feed line.

8. The antenna structure according to claim 7, wherein:
an adjustment member protrudes from the reflection surface of the reflection plate; and
a wave width of an antenna is adjusted by adjusting a height of the adjustment member protruding from the reflection surface.

9. The antenna structure according to claim 7, wherein the feed line is electrically connected to the radiation unit through a phase difference network.

10. The antenna structure according to claim 7, wherein the radiation unit is a dipole radiation unit, and the feed line is electrically connected to the dipole radiation unit.

11. The antenna structure according to claim 7, wherein the radiation unit is a gap feed radiation unit, and the feed line is electrically connected to the gap feed radiation unit.
